# FASCICULE DE BREVET EUROPEEN

(11) **EP 3 353 594 B1**
(45) Date de publication et mention de la délivrance du brevet: **05.11.2025**
(21) Numéro de dépôt: 16767340.9
(22) Date de dépôt: 08.09.2016
(51) Int. Cl.: G02C 1/08, G02C 7/08, G02C 11/00, G02C 5/02

(54) **MONTURE ÉLECTRONIQUE**
ELEKTRONISCHE FASSUNG
ELECTRONIC FRAME

(30) Priorité: 24.09.2015 EP 15306486
(43) Date de publication de la demande: 01.08.2018
(73) Titulaire: Essilor International, 94220 Charenton-le-Pont (FR)
(72) Inventeur: JOUARD, Ludovic, 94227 Charenton Le Pont Cedex (FR); PATIN, Eric, 73400 Ugine (FR)
(74) Mandataire: Plasseraud IP
(86) Numéro de dépôt international: PCT/FR2016/052249
(87) Numéro de publication internationale: WO 2017/051094

(56) Documents cités:
- WO-A1-2013/025933
- WO-A2-2013/188805
- US-A1- 2008 013 041
- US-A1- 2012 127 420
- US-A1- 2014 204 331

## Description

L'invention concerne une monture électronique.

Il s'agit d'une monture électronique comportant notamment au moins un composant électronique, pour réaliser un dispositif optique, par exemple une paire de lunettes équipée de verres de correction, par exemple des lentilles de correction ou des verres de type cellules ophtalmiques à amplitude variable, commandées par un circuit électronique, ou bien encore avec de simples verres, teintés ou non.

Une monture électronique pour dispositif optique comporte usuellement :
- un élément de face comprenant un logement d'accueil pour au moins un verre,
- et au moins un composant électronique.

Une monture électronique est connue de WO 2013/025933 A1.

La réalisation d'un élément de face de monture électronique inclut la présence de connexions électriques, vers des capteurs, des composants électroniques actifs et des éléments de connectique répartis à différents endroits de la face.

On comprendra par « face », un ensemble d'éléments d'une monture électronique pour un dispositif optique destinés à être placés devant un visage lorsque la monture électronique est portée par un utilisateur.

Le positionnement des composants électroniques ou des connexions électriques dans la face d'une monture électronique optique est parfois compliqué.

L'invention vise à proposer une monture électronique facile à réaliser, en permettant un montage simple et accessible des composants et des connexions, même après installation dudit verre.

Par ailleurs, l'invention vise à proposer une monture électronique esthétique et dans laquelle les composants électroniques ainsi que les connexions sont protégés.

L'invention propose à cet effet une monture électronique du type précité, c'est-à-dire comportant un élément de face comprenant un logement d'accueil, apte à loger au moins partiellement un verre, ladite monture électronique comportant au moins un composant électronique. La monture électronique conforme à l'invention est remarquable en ce que ledit élément de face comporte au moins un renfoncement d'accueil dudit au moins un composant électronique.

On comprendra par « renfoncement » une cavité ouverte, formant une empreinte dans l'élément de face.

L'élément de face ainsi réalisé permet un positionnement simple des composants électroniques, puisqu'il suffit d'insérer le composant dans un renfoncement, avant ou après le positionnement d'au moins un verre, en amont de toute autre opération de montage de la monture électronique.

Le logement d'accueil est en outre distinct dudit au moins un renfoncement. On comprendre par « distinct » le fait d'être « séparé de », d'exister en tant que tel, de ne pas comporter de parties communes.

Ledit renfoncement comporte au moins une partie saillante de retenue dudit au moins un composant. La partie saillante de retenue permet de maintenir en place le composant, ce qui permet de faciliter le montage de la monture électronique,

Comme le renfoncement est une cavité ouverte, le composant électronique reste accessible même après avoir été positionné dans le renfoncement.

La monture électronique conforme à l'invention peut également comporter les caractéristiques suivantes, prises séparément ou en combinaison :
- ledit au moins un renfoncement peut présenter une section dont la forme est au moins partiellement complémentaire de la forme dudit au moins un composant électronique. Ce mode de réalisation permet de reconnaitre le composant à insérer et de le maintenir en place.
- ledit au moins un renfoncement peut présenter un identifiant permettant d'identifier ledit au moins un composant à accueillir. Ce mode de réalisation facilite également le montage,
- ledit au moins un renfoncement peut comporter un fond présentant une surface convexe. La surface convexe facilite l'insertion du composant électronique dans le renfoncement,
- ledit renfoncement peut être conformé pour permettre un accès à un composant électronique associé audit au moins un verre, une fois ledit au moins un verre inséré au moins partiellement dans ledit logement et ledit composant électronique associé au verre inséré dans ledit renfoncement,
- ledit au moins un composant électronique peut être l'un des composants électroniques parmi le groupe comprenant : un composant actif, un composant passif, un câble, un circuit flexible, un capteur photosensible, ou une diode électroluminescente,
- ledit élément de face peut être une nacelle conçue pour accueillir une partie supérieure d'au moins un verre,
- la monture électronique peut comporter un berceau, présentant un logement d'accueil secondaire, apte à loger au moins partiellement une partie inférieure dudit au moins un verre, ledit berceau et ladite nacelle étant aptes à cercler ensemble ledit au moins un verre,
- ledit élément de face peut, suivant un autre mode de réalisation, être un berceau, apte à loger au moins partiellement une partie inférieure dudit au moins un verre.
- ledit élément de face peut être réalisé dans un matériau souple et peut définir au moins un logement apte à cercler un verre.
- la monture électronique peut comporter au moins un composant électronique, logé dans ledit au moins un renfoncement, et une poutre fixée au moins partiellement sur ledit élément de face, ladite poutre masquant ledit au moins un renfoncement dans lequel est accueilli ledit au moins un composant électronique. De cette façon, les composants électroniques sont protégés de l'environnement,
- enfin, la monture électronique peut comporter deux branches reliées chacune à une extrémité dudit élément de face, par une charnière.

L'invention concerne également un dispositif optique comportant une monture électronique telle que définie ci avant et au moins un verre actif.

Pour pouvoir être exécutée, l'invention est exposée de façon suffisamment claire et complète dans la description suivante qui est, en plus, accompagnée de dessins dans lesquels :
- La figure 1 est une vue en perspective et éclatée d'une monture électronique équipée de verres, selon un premier mode de réalisation conforme à l'invention,
- La figure 2 est une vue en perspective d'une partie de la monture électronique équipée de verres illustrée en figure 1, la figure 2 montrant l'avant de la face de la monture électronique,
- La figure 3 est une autre vue en perspective de la monture électronique illustrée en figure 2, montrant l'arrière de la face de la monture électronique,
- La figure 4 est une vue en perspective d'une poutre apte à équiper la monture électronique montrée sur la figure 1, la poutre étant montrée en position retournée par rapport à sa position illustrée en figure 1,
- Et la figure 5 est une vue en coupe partielle d'une monture électronique conforme à l'invention avec tous les éléments illustrés en figure 1 assemblés ensemble.

Par souci de clarté, seuls les éléments utiles à la compréhension des modes de réalisation décrits ont été représentés.

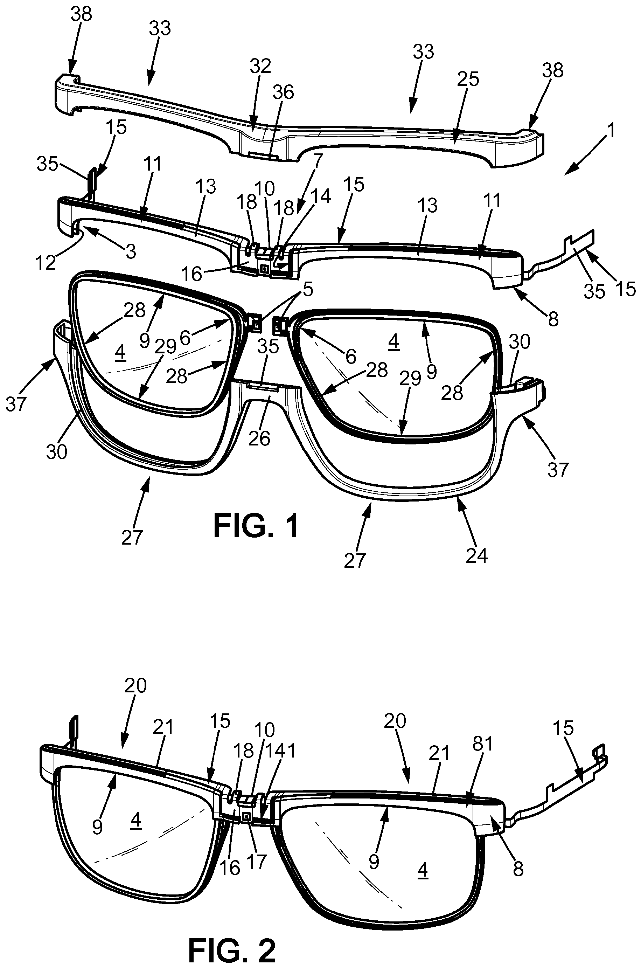

La figure 1 représente plusieurs éléments qui constituent ensemble une monture électronique conforme à l'invention, et plus particulièrement une face d'une monture électronique, c'est-à-dire la partie de la monture électronique qui vient se positionner devant le visage d'un porteur de la monture électronique. Les éléments sont illustrés en étant dissociés les uns des autres.

La monture électronique 1 comporte un élément de face 2 qui comprend un logement d'accueil 3, apte à loger partiellement un verre 4.

Dans l'exemple illustré sur les figures, la monture électronique 1 est conçue pour accueillir deux verres 4, mais il devra être entendu que l'invention n'est pas limitée à une monture électronique conçue pour accueillir deux verres. En effet, la monture électronique conforme à l'invention pourrait être conçue pour n'accueillir qu'un seul verre en forme de masque, sans sortir du cadre de l'invention, le verre en forme de masque étant suffisamment étendu pour s'étendre devant les deux yeux d'un porteur lorsque la monture électronique est portée.

De plus, dans le cadre de cet exemple, les deux verres 4 sont des verres actifs. On comprendra par verre actif un verre qui est associé à un composant électronique permettant de le faire changer d'état lorsque le composant électronique est activé.

Par exemple, les verres 4 actifs peuvent être des cellules ophtalmiques à amplitude variable commandées par un circuit électronique 5, des verres à modulation de phase ou des verres informatifs..

Il devra être entendu que l'invention n'est pas limitée à un dispositif optique comportant une monture électronique équipée de verres actifs. En effet, un dispositif comportant une monture électronique conforme à l'invention peut être équipé de verres passifs, c'est-à-dire de verres qui peuvent présenter des propriétés optiques (ou non) mais qui ne sont pas conçus pour changer d'état (sous commande d'un composant électronique, par exemple).

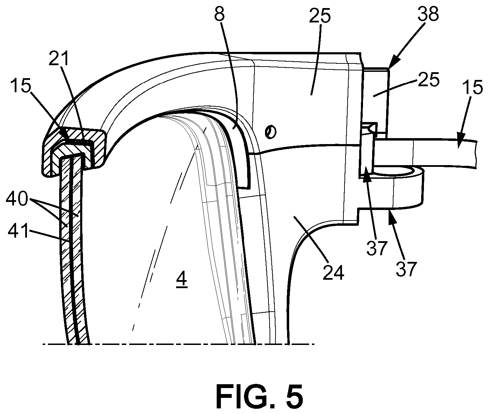

La figure 5 montre en coupe un verre de type cellule ophtalmique à amplitude variable, le verre 4 comprenant deux parois parallèles 40, réalisées dans un premier matériau, entre lesquelles est emprisonnée une couche 41 réalisée dans un second matériau.

Chacun des verres 4 est de forme ovoïdale et est relié à son circuit de commande 5 positionné sur une partie 6 du verre, la partie 6 étant destinée à être positionnée en regard du nez d'un porteur de la monture électronique 1.

La zone de la monture électronique 1 conçue pour être positionnée au niveau du nez d'un porteur sera appelée zone nasale 7 de la monture électronique.

Pour être qualifiée d'électronique, la monture électronique 1 peut comporter un ou plusieurs composants électroniques, indépendamment des deux circuits électroniques 5 des verres 4.

Dans l'exemple décrit, l'élément de face 2 comportant au moins un composant électronique est une nacelle 8 conçue pour accueillir au moins partiellement une partie supérieure 9 des verres 4.

La nacelle 8 est une pièce longitudinale, présentant une face avant 81 orientée vers l'avant de la monture électronique et une face arrière 82 orientée vers l'arrière de la monture électronique. La face arrière 82 de la nacelle 8 se trouve en regard du visage du porteur quand le porteur porte la monture électronique 1.

La nacelle 8 présente une partie centrale 10 située au niveau de la zone nasale 7 de la monture électronique 1.

De part et d'autre de la partie centrale 10, la nacelle 8 présente deux parties symétriques 11 par rapport à la partie centrale 10.

Chaque partie symétrique 11 est formée par un profilé en arc de cercle 13, qui comporte une rainure 12 conçue pour accueillir la partie supérieure 9 d'un verre 4. La courbure de la forme en arc de cercle 13 correspond sensiblement à la forme de la partie supérieure 9 du verre.

Conformément à l'invention, la nacelle 8 (correspondant à l'élément de face 2) comporte au moins un renfoncement 14 pour accueillir au moins un composant électronique de la monture électronique 1.

Plus exactement, dans le cadre de cet exemple de réalisation, la nacelle 8 comporte plusieurs renfoncements 14, chaque renfoncement 14 permettant d'accueillir au moins un composant électronique.

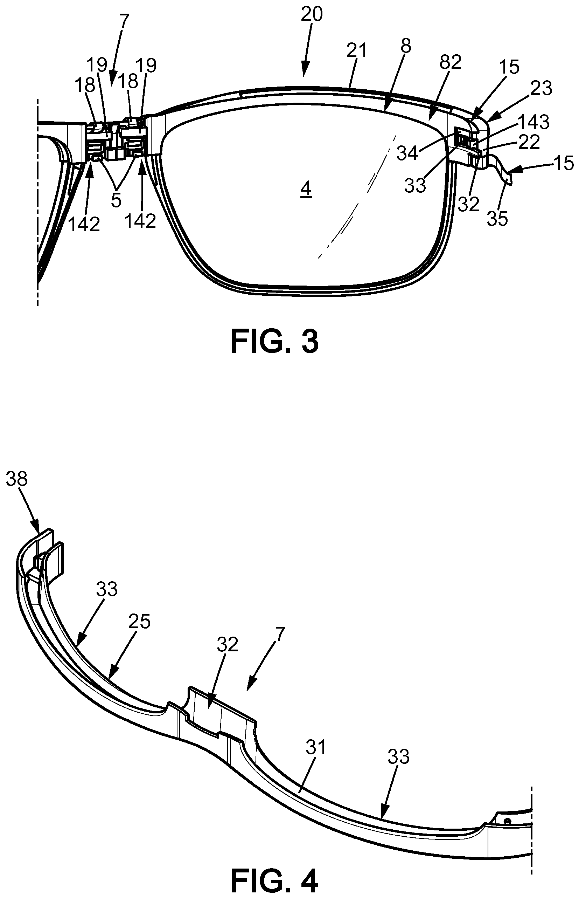

Il va maintenant être fait référence aux figures 2 et 3 pour décrire les renfoncements 14 et les composants électroniques.

Les composants électroniques peuvent être de différentes natures : il peut s'agir d'un composant actif ou d'un composant passif.

On comprendra par composant actif un composant électronique permettant de générer ou de traiter une réponse suite à la réception d'un signal en provenance d'autres composants actifs.

On comprendra par composant passif un composant électronique permettant de transmettre des signaux, sans toutefois en générer ou en traiter. Par exemple, un circuit flexible comportant uniquement une bande conductrice, ou bien encore un câble, est un composant passif. Un circuit actif est par exemple un capteur photosensible, une diode électroluminescente.

La monture électronique conforme à l'invention peut comporter l'un quelconque des composants énumérés ci-dessus.

L'un des composants électroniques est un ruban conducteur 15, appelé couramment « flex », qui est réalisé par un support flexible sur lequel a été imprimée une piste conductrice. Autrement dit, le ruban conducteur 15 est un circuit flexible.

Le ruban conducteur 15 est conçu pour relier les circuits électroniques 5 ou d'autres composants électroniques, par exemple un autre circuit de commande, une diode électroluminescente, une batterie d'alimentation en énergie électrique, un capteur de luminosité etc.

Le ruban conducteur 15 comporte une partie centrale de ruban 16 de forme sensiblement rectangulaire, conçue pour être positionnée au niveau de la zone nasale 7 de la monture électronique 1, sur la face avant de la monture électronique 1.

Pour ce faire la nacelle 8 présente, sur sa partie centrale 10 et sur sa face avant 81, un premier renfoncement 141 conçu pour accueillir la partie centrale de ruban 16.

Le renfoncement 141 présente une forme complémentaire à celle de la partie centrale de ruban 16 de manière à ce que, quand la partie centrale de ruban 16 est insérée dans le renfoncement 141, elle soit callée en position.

Le fait de prévoir un renfoncement 14 de forme complémentaire à celle d'un composant électronique permet d'orienter correctement le composant à placer, et de le maintenir en place une fois inséré. Cela permet de maintenir en place le composant électronique, ce qui facilite le montage de la monture électronique et/ou du dispositif optique comportant une telle monture électronique.

La forme complémentaire du renfoncement 14 permet également d'identifier le composant à placer (en comparant les formes du renfoncement et du composant).

Il devra être compris que l'invention pourrait comporter d'autres moyens d'identification, comme par exemple une inscription ou un symbole gravé au fond du renfoncement 14.

Le renfoncement 141 présente un fond présentant une surface convexe, pour faciliter le positionnement du ruban conducteur 15.

Un capteur de luminosité 17 est fixé sensiblement au centre de la partie centrale de ruban 16.

Le capteur de luminosité 17 doit être relié aux circuits électroniques 5 des verres actifs 4. Aussi, le ruban conducteur 15 comporte deux pattes 18 passant par-dessus la partie centrale 10 de la nacelle 8, les pattes 18 présentant des extrémités venant se loger dans des renfoncements 142 ménagés dans la face arrière 82 de la nacelle 8 sur la partie centrale 10 de la nacelle.

Les renfoncements 142 présentent au moins partiellement la forme des circuits 5 électroniques 5 des verres de manière à pouvoir les accueillir. En effet, les circuits électroniques 5 des verres sont fixés sur les extrémités des pattes 18 du ruban conducteur 15, de sorte à être relié au capteur de luminosité 17, permettant d'activer ou de désactiver les circuits électroniques 5 des verres 4.

Aussi, chacun des renfoncements 142 accueille une extrémité de patte 18 du ruban conducteur 15 sur laquelle est positionné un circuit électronique 15.

Comme chacun des renfoncements 142 présente une forme partiellement complémentaire à la forme du circuit électronique 5, ce dernier est maintenu en place lors du montage du dispositif optique comportant une monture électronique conforme à l'invention et des verres actifs 4.

Les pattes 8 et leurs extrémités sont maintenues en place sur la face arrière de la partie centrale 10 de la nacelle 8, dans les logements 142, grâce à des barrettes 19 de positionnement.

Chaque renfoncement 142 comporte en effet une barrette 19 saillante, qui relie deux bords du renfoncement 142, formant un pont sous lequel la patte 18 du ruban conducteur 15 peut passer.

On constate ainsi que le renfoncement 142 est conformé pour accueillir le circuit électronique 5 associé à un verre 4 actif quand le verre 4 est inséré partiellement dans la rainure 12 d'accueil de la nacelle 8. La conformation du renfoncement 142 permet un accès au circuit électronique 5.

Ceci est possible également grâce au fait que le renfoncement 142 est distinct de la rainure 12 accueillant le verre 4.

On comprendra par « distinct » le fait que le renfoncement 142 et la rainure 12 sont deux creux différents, qui ne comportent aucune partie commune.

Le ruban conducteur 15 présente deux parties symétriques 20 par rapport à la partie centrale 16, qui s'étendent de part et d'autre de la partie centrale 16 appartenant aux éléments de la zone nasale 7 de la monture électronique.

Chaque partie symétrique 20 du ruban conducteur 15 comporte une bande 21 qui s'étend sur une longueur sensiblement égale à la longueur d'une partie symétrique 11 de la nacelle 8, de sorte que cette bande 21 soit fixée par collage sur toute la longueur de la tranche de la partie symétrique 11 de la nacelle 8.

La bande 21 présente, à son extrémité, une première partie coudée de bande 22 (figure 3) qui est fixée sur l'extrémité 23 de nacelle.

L'extrémité 23 de la nacelle 28 est conçue pour être reliée à une branche au moyen d'une charnière. L'autre extrémité 24 de la nacelle est également conçue pour être reliée à une branche au moyen d'une charnière. Les branches n'ont pas été illustrées sur les figures, afin de faciliter la lecture des figures.

De cette façon, la monture électronique 1 peut être équipée de branches, pour permettre à un porteur de porter le dispositif comportant une telle monture électronique 1 équipée de verres 4 en positionnant les branches de la monture électronique 1 au-dessus de ses oreilles.

La première partie coudée de bande comporte une patte 32 apte à s'insérer dans un troisième renfoncement 143, ce dernier étant réalisé dans la face arrière 82 de la nacelle 8 sensiblement à l'extrémité 22 de la nacelle 8.

Le troisième renfoncement 143 est destiné à loger une diode électroluminescente 33, positionnée sur la patte 32 du ruban conducteur 15.

La patte 32 est maintenue en place dans le renfoncement 143 par une partie saillante 34 d'un bord du renfoncement 143, la partie saillante étant dirigée vers l'intérieur du renfoncement 143.

La première partie coudée de bande 22 est prolongée par une seconde partie de bande 35, formant un coude avec la première partie de bande 22, de sorte à prolonger le ruban conducteur 15 de part et d'autre de la nacelle 8 suivant une courbe sensiblement parallèle à la courbe suivant laquelle s'étend la bande 21.

Les secondes parties de bande 35 sont conçues pour être accueillies dans les branches de la monture électronique et elles ont pour objectif de relier des composants électroniques situés dans les branches aux composants électroniques portés par la nacelle 8.

Dans le présent exemple de réalisation, la monture électronique 1 comporte également un berceau 24 et une poutre 25 (figure 1), permettant respectivement de cercler les parties latérale 28 et inférieure 29 des verres 4 d'une part, et de protéger la nacelle 8 comportant les composants électroniques en venant les recouvrir, d'autre part.

Le berceau 24 et la poutre 25 sont conçus pour se fixer l'un à l'autre, enfermer la nacelle 8 portant les composants électroniques (ruban conducteur 15, capteur 17, circuits électroniques 5 des verres 4), et cercler verres 4 de manière à les maintenir en place.

Le berceau 24 est montré en figure 1. Il comporte une partie centrale de berceau 26 conçue pour appartenir aux éléments de la zone nasale 7 de la monture électronique 1.

De part et d'autre de la partie centrale 26 de berceau 24, ce dernier comporte deux parties de berceau 27 symétriques par rapport à la partie centrale 26, chacune des parties symétriques de berceau 27 présentant une forme complémentaire à celle des parties latérales 28 et inférieure 29 des verres 4.

Chacune des parties symétriques 27 comporte une rainure interne 30 dans laquelle sont insérées les parties latérales 28 et inférieure 29 des verres 4 (figure 1).

La poutre 25 présente une forme sensiblement identique à celle de la nacelle 8, et comprend une section en forme de U formant un logement 31 pour accueillir la nacelle 8 et tous les composants électroniques qu'elle porte (voir figures 4 et 5).

La poutre 25 présente ainsi une partie centrale 32 de poutre, qui appartient aux éléments de la zone nasale 7 de la monture électronique, et deux parties 33 symétriques par rapport à la partie centrale 32 de poutre 25, qui s'étendent de part et d'autre de la partie centrale 32.

La partie centrale 32 de poutre est conçue pour être assemblée avec la partie centrale 26 de berceau.

Chacune des parties centrales de poutre 32 ou de berceau 26 comporte une découpe, respectivement 35 et 36, les deux découpes 35 et 36 venant en regard l'une de l'autre quand le berceau 24 est assemblé à la poutre 25.

De cette façon, quand le berceau 24 et la poutre 25 sont assemblés et forment un coffrage autour des verres 4 et de la nacelle 8, les deux découpes 35 et 36 forment une ouverture traversante permettant aux rayonnements lumineux de traverser le coffrage au niveau de la zone nasale 7 de la monture électronique 1, de sorte que les rayonnements lumineux puissent atteindre le capteur de luminosité 17.

Le berceau 24 et la poutre 25 comportent enfin des extrémités 37 et 38, respectivement, qui sont conformées pour s'assembler avec les extrémités de branches et recevoir une charnière.

On comprend de la description qui précède comment, grâce à l'invention, il est facile de créer un dispositif optique complet, permettant de positionner et de fixer facilement des composants électroniques sur un élément de face de la monture électronique (une nacelle 8 dans l'exemple illustré sur les figures) avant ou après avoir monté les verres du dispositif optique. La connexion des verres actifs avec le reste de l'électronique porté par la nacelle est particulièrement aisée.

En plus de permettre un positionnement des composants électroniques sur la face d'une monture électronique, l'invention permet de les masquer.

L'invention permet également de conserver un aspect esthétique de monture électronique proche de celui d'une monture électronique classique.

La nacelle 8, dans le mode de réalisation présenté ci-avant, maintient non seulement la partie supérieure du verre 4, mais en plus elle maintient et positionne les composants électroniques qui restent accessibles car les renforcements qui logent les composants électroniques sont distincts du logement accueillant la partie supérieure du verre 4. En particulier, la nacelle permet le passage d'au moins un câble, ruban conducteur, ou fil reliant la nacelle 8 à au moins une branche, ou reliant la nacelle 8 à un verre actif 4.

Le montage des composants électroniques sur la nacelle 8 peut être effectué en amont de toute autre opération de montage d'un dispositif qui comporterait une telle monture électronique.

La nacelle 8 peut être un composant réalisé avec des technologies plastroniques. : Ces technologies permettent notamment de réaliser directement des pistes conductrices sur une pièce en plastique (la nacelle en l'occurrence). Ces technologies peuvent ainsi permettre de remplacer un câble flexible ou un fil, par exemple.

Une monture conforme à l'invention peut ainsi comporter des composants électroniques dans chaque branche et une nacelle réalisée suivant des technologies plastroniques, permettant de relier les composants des deux branches entre eux.

La poutre 25 permet de fermer l'ensemble de la monture électronique et d'assurer une fonction esthétique et de protection à l'environnement.

Dans le cadre de ce mode de réalisation, le berceau 24 et la nacelle 8 sont deux parties distinctes qui autorisent une utilisation de matériaux différents pour leur réalisation : le berceau, visible de l'extérieur, a des contraintes esthétiques fortes. La nacelle 8, non visible de l'extérieur, peut être réalisée dans un matériau plus technique (rigidité, amortissement aux chocs, capacité à diffuser la chaleur d'une diode électroluminescente).

Il devra toutefois être compris que l'invention pourrait être réalisée de façon différente de celle illustrée sur les figures sans toutefois sortir du cadre de l'invention.

Par exemple, l'élément de face comportant au moins un composant électronique pourrait être un berceau (en lieu et place d'une nacelle) apte à loger une partie inférieure d'un verre. Dans le cadre de ce mode de réalisation, il pourrait également être prévu que la monture électronique comporte une nacelle dépourvue de composant électronique, cerclant les verres au moins en partie haute.

Dans une variante de réalisation, on pourrait prévoir un berceau comportant au moins un composant électronique et aucune nacelle. Les verres du dispositif ophtalmique seraient alors retenus par un fil.

Dans une autre variante de réalisation, on pourrait également avoir un élément de face combinant nacelle et berceau, suffisamment souple pour permettre l'insertion des verres.

## Revendications

1. Monture électronique (1) comportant un élément de face (2, 8) comprenant un logement d'accueil (12), apte à loger au moins partiellement un verre (4), ladite monture électronique comportant au moins un composant électronique (15, 33), ledit élément de face (2, 8) comportant au moins un renfoncement (143) d'accueil dudit au moins un composant électronique (15, 33), ledit logement d'accueil (12) étant distinct dudit au moins un renfoncement ( 143), **caractérisée en ce que** ledit renfoncement (143) comporte au moins une partie saillante (34) de retenue dudit au moins un composant (15, 33), ladite partie saillante (34) étant saillante d'un bord du renfoncement (143) et dirigée vers l'intérieur du renfoncement (143) .

2. Monture électronique selon la revendication 1 ou 2, **caractérisée en ce que** ledit au moins un renfoncement (143) présente une section dont la forme est au moins partiellement complémentaire de la forme dudit au moins un composant électronique (15, 33).

3. Monture électronique selon l'une quelconque des revendications précédentes, **caractérisée en ce que** ledit au moins un renfoncement (143) présente un identifiant permettant d'identifier ledit au moins un composant électronique (15, 33).

4. Monture électronique selon l'une quelconque des revendications précédentes, **caractérisée en ce que** ledit au moins un renfoncement (143) comporte un fond présentant une surface convexe.

5. Monture électronique selon l'une quelconque des revendications précédentes, **caractérisée en ce que** ledit renfoncement (143) est conformé pour permettre un accès à un composant électronique (15, 33) associé audit au moins un verre (4), une fois ledit au moins un verre (4) inséré au moins partiellement dans ledit logement (12) et ledit composant électronique (15, 33) associé au verre (4) inséré dans ledit renfoncement (143).

6. Monture électronique selon l'une quelconque des revendications précédentes, **caractérisée en ce que** ledit au moins un composant électronique est l'un des composants électroniques parmi le groupe comprenant : un composant actif (17, 33), un composant passif (15), un câble, un circuit flexible (15), un capteur photosensible (17) ou une diode électroluminescente (33).

7. Monture électronique selon l'une quelconque des revendications précédentes, **caractérisée en ce que** ledit élément de face (2) est une nacelle (8) conçue pour accueillir une partie supérieure (9) d'au moins un verre (4).

8. Monture électronique selon la revendication 7, **caractérisée en ce qu'**elle comporte un berceau (24), présentant un logement d'accueil secondaire (30), apte à loger au moins partiellement une partie inférieure (29) dudit au moins un verre (4), ledit berceau (24) et ladite nacelle étant aptes à cercler ledit au moins un verre (4).

9. Monture électronique selon l'une quelconque des revendications 1 à 6, **caractérisée en ce que** ledit élément de face (2) est un berceau (24), apte à loger au moins partiellement une partie inférieure (29) dudit au moins un verre (4).

10. Monture électronique selon l'une quelconque des revendications 1 à 6, **caractérisée en ce que** ledit élément de face (2) est réalisé dans un matériau souple et définit au moins un logement apte à cercler un verre.

11. Monture électronique selon l'une quelconque des revendications précédentes, **caractérisée en ce qu'**elle comporte au moins un composant électronique (15, 17, 33), logé dans ledit au moins un renfoncement (143), et une poutre (25) fixée au moins partiellement sur ledit élément de face (2), ladite poutre (25) masquant ledit au moins un renfoncement (143) dans lequel est accueilli ledit au moins un composant électronique (15, 33).

12. Monture électronique selon l'une quelconque des revendications précédentes, **caractérisée en ce qu'**elle comporte deux branches reliées chacune à une extrémité (23) dudit élément de face (8) par une charnière.

13. Dispositif optique comportant une monture électronique selon la revendication 12 et au moins un verre actif (4).

## Patentansprüche

1. Elektronische Fassung (1), welche ein eine Aufnahme (12) umfassendes Vorderseitenelement (2, 8) aufweist, das geeignet ist, ein Glas (4) wenigstens teilweise aufzunehmen, wobei die elektronische Fassung mindestens eine elektronische Komponente (15, 33) aufweist, wobei das Vorderseitenelement (2, 8) mindestens eine Vertiefung (143) zur Aufnahme der mindestens einen elektronischen Komponente (15, 33) aufweist,
wobei die Aufnahme (12) von der mindestens einen Vertiefung (143) verschieden ist,
**dadurch gekennzeichnet, dass** die Vertiefung (143) mindestens einen vorstehenden Teil (34) zum Halten der mindestens einen Komponente (15, 33) aufweist, wobei der vorstehende Teil (34) von einem Rand der Vertiefung (143) vorsteht und zum Inneren der Vertiefung (143) hin gerichtet ist.

2. Elektronische Fassung nach Anspruch 1 oder 2, **dadurch gekennzeichnet, dass** die mindestens eine Vertiefung (143) einen Querschnitt aufweist, dessen Form wenigstens teilweise komplementär zur Form der mindestens einen elektronischen Komponente (15, 33) ist.

3. Elektronische Fassung nach einem der vorhergehenden Ansprüche, **dadurch gekennzeichnet, dass** die mindestens eine Vertiefung (143) einen Identifikator aufweist, der es ermöglicht, die mindestens eine elektronische Komponente (15, 33) zu identifizieren.

4. Elektronische Fassung nach einem der vorhergehenden Ansprüche, **dadurch gekennzeichnet, dass** die mindestens eine Vertiefung (143) einen Boden aufweist, der eine konvexe Oberfläche aufweist.

5. Elektronische Fassung nach einem der vorhergehenden Ansprüche, **dadurch gekennzeichnet, dass** die Vertiefung (143) dafür ausgebildet ist, einen Zugang zu einer elektronischen Komponente (15, 33) zu ermöglichen, die dem mindestens einen Glas (4) zugeordnet ist, nachdem das mindestens eine Glas (4) wenigstens teilweise in die Aufnahme (12) eingesetzt worden ist und die dem Glas (4) zugeordnete elektronische Komponente (15, 33) in die Vertiefung (143) eingesetzt worden ist.

6. Elektronische Fassung nach einem der vorhergehenden Ansprüche, **dadurch gekennzeichnet, dass** die mindestens eine elektronische Komponente eine der elektronischen Komponenten aus der Gruppe ist, welche umfasst: eine aktive Komponente (17, 33), eine passive Komponente (15), ein Kabel, eine flexible Schaltung (15), einen Photosensor (17) und eine Leuchtdiode (33).

7. Elektronische Fassung nach einem der vorhergehenden Ansprüche, **dadurch gekennzeichnet, dass** das Vorderseitenelement (2) ein Aufsatz (8) ist, der dafür ausgebildet ist, einen oberen Teil (9) mindestens eines Glases (4) aufzunehmen.

8. Elektronische Fassung nach Anspruch 7, **dadurch gekennzeichnet, dass** sie einen Rundbogen (24) umfasst, der eine sekundäre Aufnahme (30) aufweist, die geeignet ist, einen unteren Teil (29) des mindestens einen Glases (4) wenigstens teilweise aufzunehmen, wobei der Rundbogen (24) und der Aufsatz geeignet sind, das mindestens eine Glas (4) zu umranden.

9. Elektronische Fassung nach einem der Ansprüche 1 bis 6, **dadurch gekennzeichnet, dass** das Vorderseitenelement (2) ein Rundbogen (24) ist, der geeignet ist, einen unteren Teil (29) des mindestens eines Glases (4) wenigstens teilweise aufzunehmen.

10. Elektronische Fassung nach einem der Ansprüche 1 bis 6, **dadurch gekennzeichnet, dass** das Vorderseitenelement (2) aus einem nachgiebigen Material hergestellt ist und mindestens eine Aufnahme definiert, die geeignet ist, ein Glas zu umranden.

11. Elektronische Fassung nach einem der vorhergehenden Ansprüche, **dadurch gekennzeichnet, dass** sie mindestens eine elektronische Komponente (15, 17, 33), die in der mindestens einen Vertiefung (143) aufgenommen ist, und einen Träger (25), der wenigstens teilweise an dem Vorderseitenelement (2) befestigt ist, aufweist, wobei der Träger (25) die mindestens eine Vertiefung (143), in der die mindestens eine elektronische Komponente (15, 33) aufgenommen ist, verdeckt.

12. Elektronische Fassung nach einem der vorhergehenden Ansprüche, **dadurch gekennzeichnet, dass** sie zwei Bügel aufweist, die jeweils mit einem Ende (23) des Vorderseitenelements (8) durch ein Scharnier verbunden sind.

13. Optische Vorrichtung, welche eine elektronische Fassung nach Anspruch 12 und mindestens ein aktives Glas (4) aufweist.

## Claims

1. Electronic frame (1) including a front element (2, 8) comprising an accommodating housing (12), able to at least partially house a lens (4), said electronic frame including at least one electronic component (15, 33), said front element (2, 8) including at least one recess (143) for accommodating said at least one electronic component (15, 33),
said accommodating housing (12) being distinct from said at least one recess (143),
**characterized in that** said recess (143) includes at least one protruding portion (34) for retaining said at least one component (15, 33), said protruding portion (34) protruding from an edge of the recess (143) and being directed toward the interior of the recess (143).

2. Electronic frame according to Claim 1 or 2, **characterized in that** said at least one recess (143) has a cross section the shape of which is at least partially complementary to the shape of said at least one electronic component (15, 33).

3. Electronic frame according to any one of the preceding claims, **characterized in that** said at least one recess (143) has an identifier allowing said at least one electronic component (15, 33) to be identified.

4. Electronic frame according to any one of the preceding claims, **characterized in that** said at least one recess (143) includes a bottom having a convex surface.

5. Electronic frame according to any one of the preceding claims, **characterized in that** said recess (143) is shaped in order to allow access to an electronic component (15, 33) associated with said at least one lens (4), once said at least one lens (4) has been at least partially inserted into said housing (12) and said electronic component (15, 33) associated with the lens (4) has been inserted into said recess (143).

6. Electronic frame according to any one of the preceding claims, **characterized in that** said at least one electronic component is an electronic component chosen from the group comprising: an active component (17, 33), a passive component (15), a cable, a flexible circuit (15), a photosensitive sensor (17) or a light-emitting diode (33).

7. Electronic frame according to any one of the preceding claims, **characterized in that** said front element (2) is a holder (8) designed to accommodate an upper portion (9) of at least one lens (4).

8. Electronic frame according to Claim 7, **characterized in that** it includes a cradle (24), having a secondary accommodating housing (30), able to at least partially house a lower portion (29) of said at least one lens (4), said cradle (24) and said holder being able to encircle said at least one lens (4).

9. Electronic frame according to any one of Claims 1 to 6, **characterized in that** said front element (2) is a cradle (24) able to at least partially house a lower portion (29) of said at least one lens (4).

10. Electronic frame according to any one of Claims 1 to 6, **characterized in that** said front element (2) is made from a flexible material and defines at least one housing able to encircle a lens.

11. Electronic frame according to any one of the preceding claims, **characterized in that** it includes at least one electronic component (15, 17, 33), housed in said at least one recess (143), and a beam (25) at least partially fastened to said front element (2), said beam (25) masking said at least one recess (143) in which said at least one electronic component (15, 33) is accommodated.

12. Electronic frame according to any one of the preceding claims, **characterized in that** it includes two temples each connected to one end (23) of said front element (8) by a hinge.

13. Optical device including an electronic frame according to Claim 12 and at least one active lens (4).
